# EUROPEAN PATENT APPLICATION

(11) **EP 1 898 434 A1**
(43) Date of publication of application: **12.03.2008**
(21) Application number: 06767403.6
(22) Date of filing: 27.06.2006
(51) Int. Cl.: H01G 9/155, H01G 9/10, H01G 9/12

(54) **ELECTRIC DOUBLE LAYER CAPACITOR**

(30) Priority: 30.06.2005 JP 2005191404
(71) Applicant: Nisshinbo Industries, Inc., Chuo-ku, Tokyo 103-8650 (JP)
(72) Inventor: KUBOTA, Satoshi c/o Nisshinbo Industries, Inc., Chiba-shi, Chiba 2670056 (JP)
(74) Representative: Barth, Stephan Manuel
(86) International application number: PCT/JP2006/312786
(87) International publication number: WO 2007/004467

(57) **Abstract**

An electric double layer capacitor having a structure with little deformation of a cap or the like due to increase in internal pressure is provided. The electric double layer capacitor includes: a stacked body 15 made of a stacked plurality of thin electrode plates 11 and 12 and thin insulating plates 13, each inserted between each adjacent electrode plate and insulating therebetween; a container 19 storing the stacked body; electrolytic solution 14 filling the container 19; a flexible cap 100, which is deployed in the container 19 and covers the container with a space 17 prepared at the end of the container along the laminating length; two inserting through-holes 101, which are formed in the cap and allow positive and negative lead terminals connected to the electrode plates to pass through; and reinforcing parts 104 provided on respective edges of the inserting through-holes. In addition, a pressure-regulating valve 130 is provided on a flat portion 110 of the cap 100.

## Description

### Technical Field

The present invention relates to an electric double layer capacitor. In particular, it relates to an electric double layer capacitor with little deformation due to increase in internal pressure of a container even if the container and corresponding cap are flexible.

### Background Art

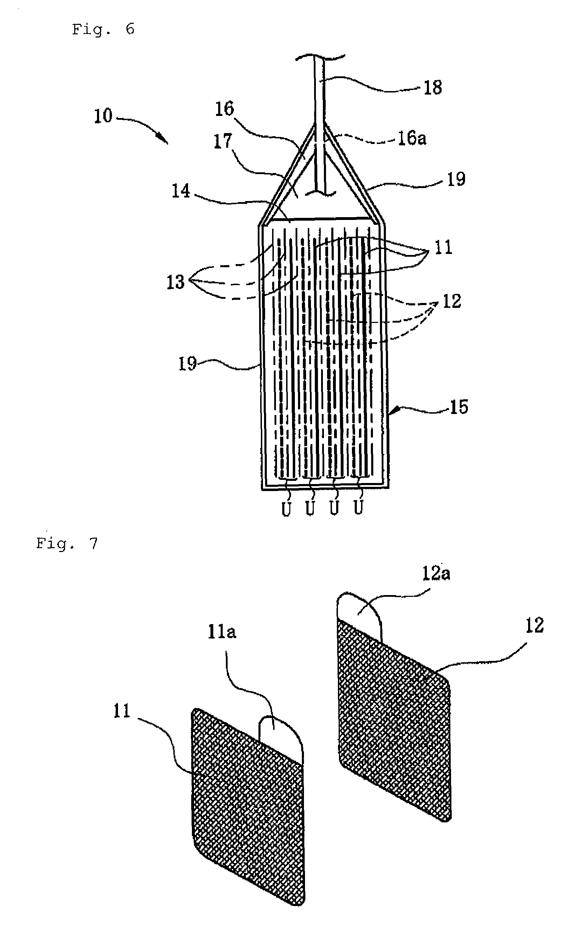

FIG. 6 is a cross section schematically showing an exemplary configuration of a conventional electric double layer capacitor, and FIG. 7 is an oblique perspective of electrode plates. An electric double layer capacitor 10 is fabricated by containing a stacked body 15 in a container 19; where the stacked body 15 is fabricated by stacking multiple units U, each insulated by a different insulating member 13, in a horizontal direction. Each of the units U is fabricated by stacking a positive electrode plate 11, a negative electrode plate 12, and an insulating member 13 insulating therebetween, in a horizontal direction. The container 19 is filled in with an electrolytic solution 14 as an electrolyte, and the opening end of the top of the container 19 is covered by a cap 16. The cap 16 is angular straddling two facing sides of the container 19; where the container 19 has an oblong cross-sectional shape. A space 17 is prepared inside at the upper part of the container 19, namely at the end of the container along the stacking length.

The positive electrode plate 11 and the negative electrode plate 12 have the same structure fabricated by applying and drying a slurry on one side or both sides of parts other than electrodes 11a and 12a, where the slurry is made by mixing activated carbon, a conducting agent, a binder, a solvent, or the like together in a current collector made of 20 to 60 µm-thick aluminum foil. The positive electrode plate 11 and the negative electrode plate 12 are arranged almost vertically and stacked in plurality in a horizontal direction. The insulating member 13 is a nonwoven fabric or porous film made of an insulating member such as paper, polypropylene, polyethylene or fiberglass and insulates so that the respective electrode plates 11 and 12 and the units U do not directly touching each other. In FIG. 6, for the sake of simplicity, the positive electrode plates 11 are indicated by solid lines, the negative electrode plates 12 are indicated by dotted lines, and the insulating members 13 are indicated by chain double-dashed lines. The units U are respectively made up of a single positive electrode plate 11, a single negative electrode plate 12, and the insulating member 13 therebetween, and the electrolytic solution 14 filled in therebetween, constituting a single capacitor. The container 19 is formed by a flexible sheet material such as a laminated aluminum film.

There are two lead terminals 18: a positive terminal collectively connecting the respective positive electrodes 11a of the respective units U, and a negative terminal collectively connecting the respective negative electrodes 12a. The edges of the angular shape or the top edge of the cap 16 has two slit-like inserting through-holes 16a for the lead terminals 18 to pass through. The cap 16 and the stacked body 15 are covered and encapsulated by the container 19.

While the electrolytic solution 14 may be an aqueous solvent, a higher voltage may be achieved using a nonaqueous solvent instead. However, with a nonaqueous solvent, incorporation of moisture must be prevented to the utmost. While the electric double layer capacitor does not rely on a chemical reaction of a material as with secondary batteries, gas may generate due to incorporated impurities, thereby increasing internal pressure of the container 19. When the internal pressure increases, the container 19 is easily deformed since it is made of synthetic resin; more specifically, the inserting through-holes 16a through which the lead terminals pass are weak and are where deformation is concentrated.

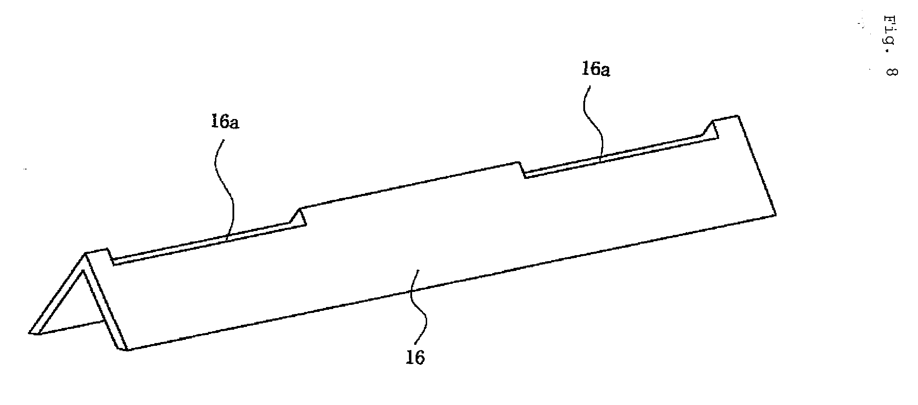

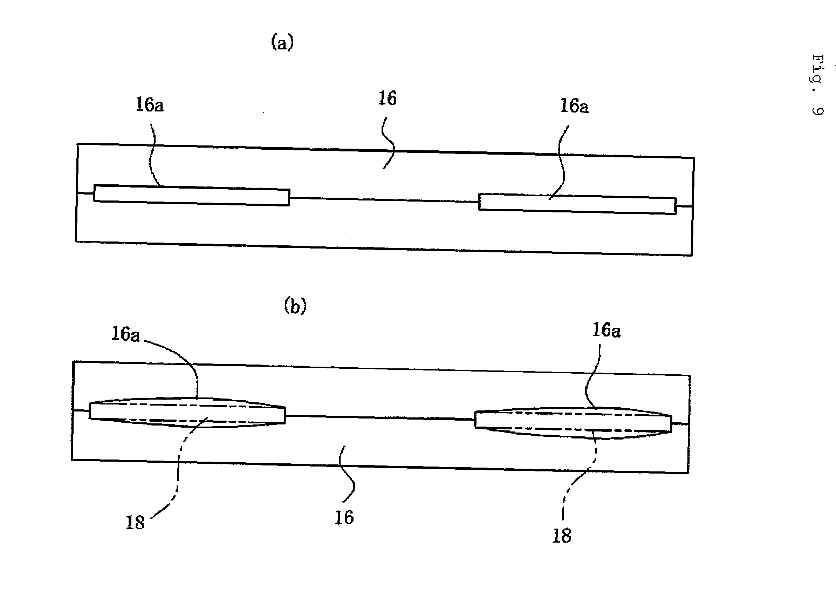

FIG. 8 is an oblique perspective of the cap 16; and FIG. 9 shows top views of the cap 16, where (a) shows a state before deformation and (b) shows a state after deformation due to pressure. If the inserting through-holes 16a deform as such, a gap develops between the lead terminals 18, the seal breaks exposing the inside of the container to the outside, and the electrolytic solution and electrodes begin to deteriorate, thereby degrading performance of the capacitor.

In addition, moisture may enter from the air surrounding the container 19. Therefore, if a laminated aluminum film, which is made by sandwiching aluminum foil or a sheet member between flexible synthetic resin layers, is used as the material of the container 19, the aluminum foil shuts out the moisture in the air, and is thus favorable. However, as long as it is capable of shutting out the moisture in the air, use of a film other than the laminated aluminum film is possible.

Note that while aluminum foil completely shuts out moisture, the film made of synthetic resin sandwiching the aluminum foil allows minute amounts of moisture to pass through. Therefore, when synthetic resin layers of the laminated aluminum film are in between the air and the inside of the container, microscopic amounts of moisture in the air may penetrate therein. More specifically, the container 19 is formed in an arbitrary shaped pouch by heat-sealing the laminated aluminum sheets of synthetic resin together; however, the inside of the pouch in the heat-sealed region of synthetic resin is separated from the outside only by that region, which allows the moisture, which penetrates the synthetic resin and moves at least the length of the heat-sealed region, to enter the container. Furthermore, structurally, the region of synthetic resin cannot be completely eliminated. As a result, the seal of the container 19 is devised to increase the width of the heat sealing region so that the moisture moves the longest possible distance within the region of synthetic resin in the laminated aluminum film.

Meanwhile, lowering the pressure using an appropriate method when the internal pressure has increased allows continued use of the capacitor even if amount of the electrolytic solution slightly decreases as long as an adequate amount is left. From such viewpoint, the space 17 is provided inside the cap 16 at the top of the container 19 (i.e., at the end of the container along the stacking length), making it possible to fill in more of the electrolytic solution.

A capacitor disclosed in Patent Document 1 where a pressure-regulating valve is provided for lowering pressure when the internal pressure of the container 19 increases is well known. This is an electric double layer capacitor using a flexible outer package such as a synthetic resin film including a small reversible pressure-regulating valve, which can be attached to the outer package easily.

However, the small reversible pressure-regulating valve disclosed in Patent Document 1 has a small thin part made of polyolefin or rubber. Therefore, when the pressure-regulating valve is fused and fixed to a flexible container member or the laminated aluminum film, parts themselves comprising the pressure-regulating valve may shrink emanating from deformation of the container in the vicinity of the pressure-regulating valve due to difference in internal and external pressure of the capacitor as well as emanating from the force developed due to that difference, thereby leading to unstable operation such as the valve operating at a pressure less than a preset pressure.

Alternatively, there is a capacitor disclosed in Patent Document 2 including a complicated, bulky gas vent valve using a coil spring or the like continuing from a space where gas accumulates at the top of the container. This complicated, bulky gas vent valve disclosed in Patent Document 2 operates correctly at a preset pressure.

However, since the valve itself is much thicker than the terminals on either side, there is a problem that for fusing and fixing a tubular opening, which is used to attach the valve, to the surrounding laminated film, the laminated film near the valve must be bent at almost a right angle, making it easier for pin holes to form in the laminated film. Further, there is a problem that configuration of the valve is complicated and costly.
Patent Document 1: Japanese Unexamined Patent Application Publication No. 2002-280272
Patent Document 2: Japanese Unexamined Patent Application Publication No. 2003-272968

### DISCLOSURE OF INVENTION

### [Problems to be Solved by the Invention]

The present invention is devised through consideration of the aforementioned problems. An objective thereof is to provide an electric double layer capacitor having a structure with little deformation of a cap even if internal pressure increases to a highest possible preset pressure so as to minimize operating times of a pressure-regulating valve. Further, in addition to the above-mentioned objective, another objective of the present invention is to provide an electric double layer capacitor including a simply structured pressure-regulating valve that is stably operable at a preset pressure and strong enough to prevent development of pin holes or the like.

### [Means of Solving the Problems]

In order to attain the objectives described above, an electric double layer capacitor of the present invention includes: a stacked body including a stacked plurality of thin electrode plates and thin insulating plates, each inserted between each adjacent thin electrode plate so as to insulate therebetween; a container made of a sheet member storing the stacked body; and an electrolytic solution filling the container. The electric double layer capacitor further includes: a cap covering a space prepared at the end of the container along the stacking length; two inserting through-holes, which are formed in the cap and allow positive and negative lead terminals connected to the electrode plates to pass through; and reinforcing parts formed on respective edges of the inserting through-holes. The reinforcing parts may be plate-shaped to be fixed to the lead terminals through adhesive bonding or the like.

When gas generates in the container and internal pressure therein thus increases, the cap deforms since it is flexible. In particular, the inserting through-holes through which the lead terminals pass may easily deform, and if a lot of deformation is made, the seal breaks and the inside of the container is exposed to the outside. The electrolytic solution and electrodes may deteriorate if the inside of the container is exposed to the outside, resulting in degraded performance or disablement of the capacitor. According to the present invention, since the reinforcing parts are provided in the inserting through-holes which are the weakest parts, deformation of the inserting through-holes may be suppressed, and exposure of the inside of the container to the outside by the seal breaking may be prevented.

The cap, which is an angular shape straggling two facing sides of an oblong cross section of inside of the container, may be deployed at the end of the stacked body in the container, and may have at least one part that is a flat portion in which a pressure-regulating valve is provided. Alternatively, the cap may be an angular shape, straggling two facing sides of an oblong cross section of inside the container, where one side of the angular shape is a flat portion and the other side is a convex curved portion.

Furthermore, the cap may be structured to have a sheet member of the container stacked thereupon, and the pressure-regulating valve including a through-hole formed in the cap, a hole formed in the sheet member, and a gas vent valve provided in the hole; the cap may be structured to have a sheet member stacked thereupon, and the pressure-regulating valve including a through-hole formed in the cap, a gas-permeable film sealing the through-hole, a hole formed in the sheet member, and a gas vent valve provided in the hole; and the gas vent valve and the gas-permeable film may be arranged apart from each other, and the sheet member and the cap over the gas vent valve and peripheral region thereof or over the gas vent valve, the gas-permeable film, and peripheral regions thereof may be detachable.

An electric double layer capacitor of the present invention includes: a stacked body including a plurality of thin electrode plates and thin insulating plates, each inserted between each adjacent electrode plate so as to insulate therebetween; a container made of a sheet member storing the stacked body; and electrolytic solution filling the container. The electric double layer capacitor further includes: a cap, which is deployed at the end of the stacked body in the container and straddles two facing sides of an oblong cross section of inside of the container, wherein the cap has at least one region that is a flat portion, a pressure-regulating valve is provided in the flat portion, and the pressure-regulating valve has a through-hole formed in the cap, a hole formed in the sheet member, and a gas vent valve provided in the hole.

The pressure-regulating valve may have a gas-permeable film sealing the through-hole of the cap, or the gas vent valve and the gas permeable film may be arranged to not overlap. The gas vent valve may be made of a flexible material, include slit-like holes that are normally closed, opening when pressure increases. The cap may be an angular shape.

### [Effects of Invention]

According to the present invention, since the shape of the inserting through-hole formed in the flexible cap is reinforced by the reinforcing part, excellent effects of preventing deformation of the inserting through-hole and thereby preventing the seal from breaking and exposing the inside of the container to the outside are achieved.

Provision of the pressure-regulating valve in the flat portion allows normal operation of the pressure-regulating valve and correct operation at a preset pressure. The pressure-regulating valve is structured including a gas vent valve and the gas-permeable film, thereby preventing leakage of electrolytic solution from the gas vent valve. Furthermore, if these are arranged apart from each other, penetration of moisture in the air into the container may be prevented.

Moreover, by making one of the sides of the cap flat and the other side curved, volume of the space may be increased without increasing height of the space formed inside the cap.

### BRIEF DESCRIPTION OF DRAWINGS

FIG. 1 is an oblique perspective showing a cap of an electric double layer capacitor of the present invention;
FIG. 2 is a diagram of the cap, where (a) is a cross section cut along the line B-B of FIG. 1, and (b) is a cross section cut along the line C-C;

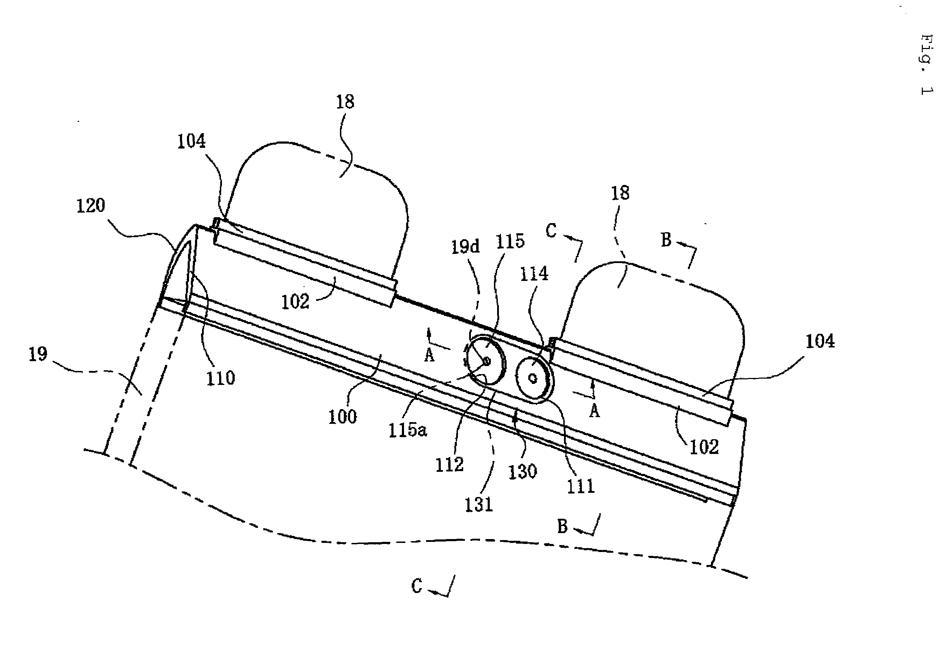

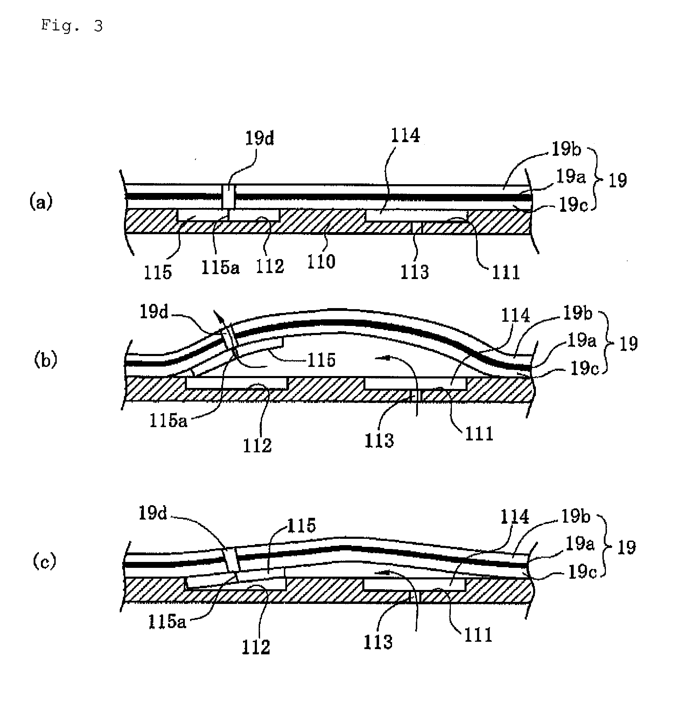

FIG. 3 is a cross section cut along the line A-A of FIG. 1, where (a) shows a state where the electric double layer capacitor before use is stored or where use has begun but the internal and the external pressure of the container are still equal to each other, (b) shows a state where internal pressure of the container is greater than the external pressure and has exceeded a preset value for a pressure-regulating valve, and (c) shows a state where internal pressure of the container is greater than the external pressure upon use of the electric double layer capacitor but is less than the preset value for the pressure-regulating valve;
FIGS. 4 (a) and (b) are diagrams showing exemplary shapes of regions in which there is no adhesive bonding to a sheet member of the pressure-regulating valve;
FIGS. 5(a) through (d) are diagrams showing examples of when the cap is oblong, and exemplary changes in positions of the pressure-regulating valve;
FIG. 6 is a cross section schematically showing a configuration of a conventional electric double layer capacitor;
FIG. 7 is an oblique perspective of electrode plates;
FIG. 8 is an oblique perspective of a conventional cap; and
FIG. 9 is a top view of the cap of FIG. 8, where (a) shows a state before deformation and (b) shows a state after deformation due to pressure.

### [Description of Reference Numerals]

- 1:: electric double layer capacitor
- 13:: (positive) electrode plate
- 12:: (negative) electrode plate
- 13:: insulating member
- 14:: electrolytic solution
- 15:: stacked body
- 17:: space
- 19:: container
- 100:: cap
- 101:: inserting through-hole
- 102:: rib
- 104:: reinforcing part
- 110:: flat portion
- 114:: gas-permeable film
- 115:: gas vent valve
- 120:: curved portion
- 130:: pressure-regulating valve
- U:: unit

### BEST MODE FOR CARRYING OUT THE INVENTION

Embodiments according to the present invention are described forthwith with reference to attached drawings.

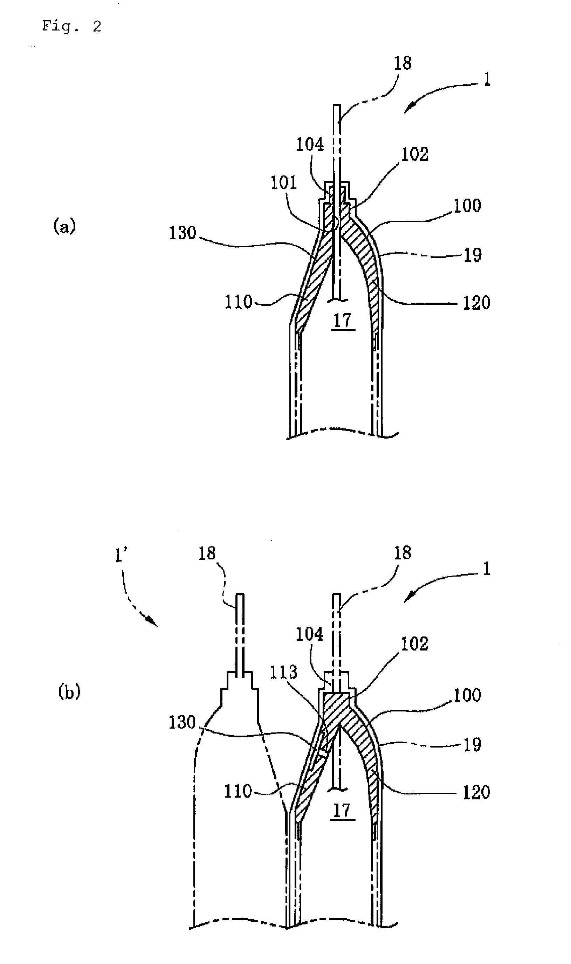

FIG. 1 is an oblique perspective showing a cap of an electric double layer capacitor 1 of the present invention. FIG. 2 is a diagram of a cap 100, where (a) is a cross section cut along the line B-B of FIG. 1, and (b) is a cross section cut along the line C-C. While parts other than the cap 100 of the electric double layer capacitor 1, for example, lead terminals 18 and a container 19 are denoted by virtual lines, the structure other than the cap 100 is the same as described in the conventional example.

Note that in the arrangement of the positive electrode plates 11 and the negative electrode plates 12, positive and negative electrode plates of the entire stacked body 15 are alternately deployed one by one sandwiching respective insulating members 13, where electrode plates on either ends of the stacked body 15 are typically negative electrode plates.

The cap 100 is made of plastic and molded by blow molding, injection molding or the like, or assembling molded components prepared in that manner into a three-dimensional form. The cap 100, which is angular so as to straddle the two facing long sides of the container 19 in the oblong cross section of the container, is inserted in the container 19 from an oblong opening formed at the top of the container 19; where one side is a flat portion 110 and the other side is a curved portion 120. By making one side be the curved portion 120 and outwardly swell, only volume may be increased without increase in height of the space 17 formed inside the cap 100. This is critical for improving capacity per weight of the electric double layer capacitor 1. Enlarging the space 17 allows increase in the amount of surplus electrolytic solution, and enhancement in a buffer function of temporarily storing generated gas.

As shown in FIG. 2(a), inserting through-holes 101 are formed in regions through which the lead terminals 18 of the cap 100 are to be inserted, and ribs 102 may be formed outside these inserting through-holes 101. Alternatively, these ribs may be formed by making the inside as well as the outside of the angular cap thicker. Furthermore, two parallel plate reinforcing parts 104 are provided standing straight at respective crowns of the ribs 102. While either one of these may be molded as one with the cap 100 at the same time as the cap 100 is molded, the ribs 102 and the reinforcing parts 104 may be formed unified as one, or they may be formed separate from the cap 100 and either adhesively bonded or heat sealed to the cap.

In order to store the cap 100 and the stacked body 15, the container 19 is formed in a pouch shape to secure adequate volume of a laminated aluminum film, which has both sides of aluminum foil 19a sandwiched by flexible synthetic resin layers. For example, the sheet may be folded in half and the two facing sides adjoined to the fold then thermocompression bonded together. Once the stacked body 15 and the electrolytic solution 14 are put into the pouch shaped container, the cap 100 is inserted, the lead terminals 18 are passed through the inserting through-holes 101 of the cap 100, and the lead terminals 18 are thrust outside of the container 19. By thermally fusing the opening of the pouch shaped container 19 at both sides of the lead terminals 18 and the cap 100, the container 19, the cap 100, and the lead terminals 18 are sealed airtight therebetween. Alternatively, by providing in the laminated aluminum film a depression having a volume equal to tally or half of the volume of the stacked body 15, and aligning and combining the resulting laminated aluminum film with another laminated aluminum film with or without a depression and then thermally fusing around the depressions, a container may be formed.

There is no particular restriction to material of the synthetic resin layers as long as it is inactive against the electrolytic solution 14. However, if the synthetic resin layers on the inside adjoined to the cap 100 and the container 19 are made of thermoplastic resin, the sheet member of the container 19 may be thermally fused to the cap 100 and the container 19 without use of an adhesive. Furthermore, use of the same material as used for the cap 100 and the container 19 facilitates fusion. This material may be nylon, polypropylene, polyethylene, or the like, for example, preferably either polypropylene or polyethylene. Use of polyethylene terephthalate (PET), for example, for a synthetic resin layer which becomes the outer most layer of the container, allows improvement in chemical resistance and heat resistance of the container, hindrance of linear creases in the aluminum foil layers, and prevention of generation of pin holes.

The reinforcing parts 104 are thin plates and are adhered and fixed to the lead terminals 18 (which are made of aluminum and have regions adjoined to the sealing parts, to which heat sealed resin and heat sealable resin of the sheet member of the container 19 are fixed) by heat sealing. While the reinforcing parts 104 alone reinforce, attaching and fixing to the lead terminals 18 allows stronger reinforcement. The reinforcing parts 104 may prevent deformation of the inserting through-holes 101 even if the internal pressure of the container 19 increases. Furthermore, the ribs 102 increase thickness of thin part of the inserting through-holes 101, thereby reinforcing even more.

This structure allows the container 19 and the cap 100 to be sealed airtight from the outside, preventing deformation of the inserting through-holes 101 even if the internal pressure of the container 19 increases. Deformation of the container may be prevented by preventing deformation of them and appropriately releasing excessive positive pressure within the container to the outside by a pressure-regulating valve to be described forthwith. Note that since deformation of the inserting through-holes 101 may be prevented by the reinforcing parts 104 and the like, threshold pressure according to which the pressure-regulating valve operates may be set higher, thereby reducing operating times of the pressure-regulating valve.

A pressure-regulating valve 130 is provided near the outer surface center of the flat portion 110 of the cap 100. FIG. 3 is a cross section cut along the line A-A of FIG. 1, where (a) shows a state where the electric double layer capacitor before use is being stored or where use has begun but the internal and the external pressure of the container 19 are still equal to each other, (b) shows a state where internal pressure of the container is greater than the external pressure and has exceeded a preset value for the pressure-regulating valve 130, and (c) shows a state where internal pressure of the container is greater than the external pressure upon use of the electric double layer capacitor but is less than the preset value for the pressure-regulating valve. A structure of the pressure-regulating valve 130 is described forthwith.

As mentioned before, the cap 100 is covered by the sheet member of the container 19. The sheet member uses a laminated aluminum film having flexible synthetic resin layers 19b and 19c sandwiching the aluminum foil 19a. The outer surface of the flat portion 110 of the cap 100 has at least one circular concave portion, and a hole passes through the center of the concave portion. For example, when providing two circular concave portions 111 and 112 as shown in FIG. 3, a hole 113 passing through the flat portion 110 is formed in the center of the concave portion 111, and the space 17 is connected to the concave portions 111 and 112 of the flat portion 110 via the hole 113. In the case where one concave portion is provided in the flat portion 110, this hole 113 is either obstructed by attaching only a gas vent valve, or obstructed by attaching a gas-permeable film and a gas vent valve put thereupon. In the case of providing two concave portions in the flat portion 110, the hole is obstructed by attaching only a gas-permeable film 114, and a gas vent valve in the concave portion 112 is housed therewithin. The gas-permeable film 114 attached to the concave portion 111 and obstructing the hole 113 passes gas through but not liquid.

A gas vent valve 115 is attached to a sheet member of the container 19 facing the other concave portion 112. When the gas vent valve 115 can enter the concave portion 112 and the sheet member of the container 19 is adhered to the flat portion 110, the gas vent valve 115 is housed in the concave portion 112. The gas vent valve 115 is made of a flexible material such as rubber or synthetic resin and has a slit 115a in the center. A hole 19d passes through a location facing the slit 115a in the sheet member. A small opening may be formed instead of the slit 115a. The opening of the gas vent valve 115 opens when the pressure of either of the slit 115a or the small opening increases with them closed normally due to elasticity of the material. Therefore, the threshold pressure according to which gas is vented can be adjusted by selecting size or elasticity of the material used for the slit 115a, thickness of the gas vent valve or the like.

Since the container 19 that is a sheet member is used for sealing the electric double layer capacitor, in principle, the outer surfaces of the flat portion 110 and the curved portion 120 are adhered to the sheet member of the container 19 with an adhesive or through heat sealing. However, as shown in FIG. 1, within the region denoted by an ellipse 131 surrounding the concave portions 111 and 112, the flat portion 110 is not adhesively bonded to the sheet member of the container 19 so that they are detachable. When the electric double layer capacitor before use is stored or even when use has begun but internal and external pressure of the container are still equal to each other, the gas vent valve 115 is housed in the concave portion 112, as shown in FIG. 3(a). If the internal pressure of the container decreases when heat sealing the opening of the pouch shaped container so as to straddle the lead terminals 18 and seal the container 19, the gas vent valve 115 is pushed into the concave portion 112 to be reliably housed therewithin.

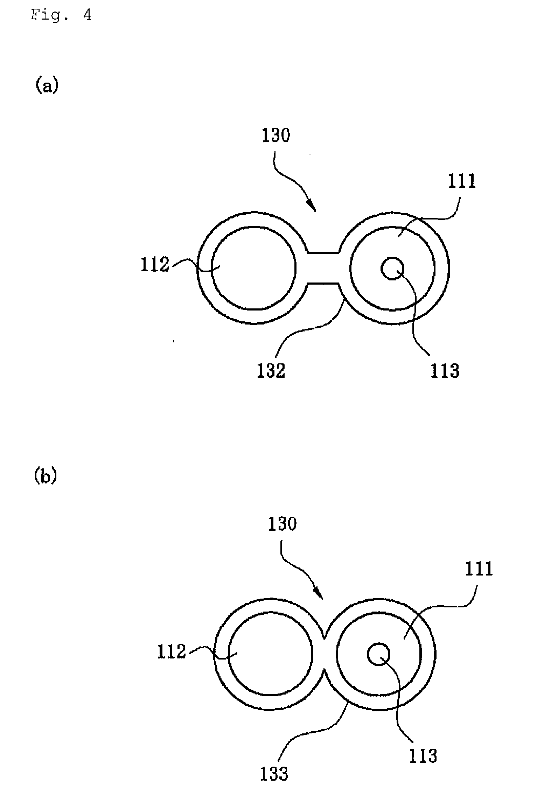

Note that while the shape of the region in which there is no adhesive bonding to the sheet member of the pressure-regulating valve 130 is denoted in FIG. 1 by the eclipse 131, the shape thereof is not limited to an eclipse. For example, a circular region slightly larger than the circumference of the concave portions 111 and 112, such as a shape 132 narrow in the middle of the concave portion 111 and the concave portion 112 as shown in FIG. 4 (a), or a shape 133 where the circles partially overlap as shown in FIG. 4(b), may be shapes connected by a width smaller than the diameter of the circles. Fabrication is the easiest in the case of an eclipse as shown in FIG. 1. The shape narrow in the middle as shown in FIG. 4(a) and shape with the circles partially overlapping as shown in FIG. 4(b) allow smaller distance from the flat portion 110 of the sheet member. Therefore, when a plurality of the electric double layer capacitor 1 as shown in FIG. 2(b) is used joined together, possibility of the pressure-regulating valve 130 adhering to an adjacent electric double layer capacitor is reduced greatly.

If the internal pressure of the container 19 becomes greater than the external pressure when starting to use the electric double layer capacitor and comes to exceed the preset value of for pressure-regulating valve 130, gas generated in the container goes through the hole 113, and passes through the gas-permeable film 114 getting in between the sheet member of the container 19 and the flat portion 110, thereby making the sheet member break away from the flat portion 110, as shown in FIG. 3(b). The gas generated in the container then widens the slit 115a of the gas vent valve 115 into a hole and breaks out to the outside from the hole 19d formed in the sheet member. This allows reduction in internal pressure of the container 19.

When the internal pressure of the container decreases lower than the preset value for the gas vent valve 115, the sheet member of the container 19 is kept in a slightly suspended state from the flat portion 110, the slit 115a is closed, and gas leakage is stopped. At this time, penetration of moisture from the outside through the hole 19d may be suppressed since the inside of the container is kept at a positive pressure less than the preset value for the gas vent valve 115.

Since the pressure-regulating valve 130 of the present invention is provided on the flat portion 110, operation is stable. In other words, the pressure-regulating valve 130 vents gas when the preset pressure is reached, while it functions as a seal blocking the inside of the container from the outside when it is less than the preset pressure.

Furthermore, since the gas-permeable film 114 is provided on the container side of the gas vent valve 115, leakage of the electrolytic solution 14 from the gas vent valve 115 may be prevented. While the gas vent valve 115 and the gas-permeable film 114 may overlap, the gas vent valve 115 may be securely closed by staggering the positions of the gas vent valve 115 and the gas-permeable film 114 so as to be apart and not overlap whatsoever, and attaching the gas vent valve 115 to the different concave portion 112 than the gas-permeable film 114. The structure of the gas vent valve 115 may be extremely simplified.

Furthermore, if aluminum foil is adhesively bonded to the entire bottom surface and the entire side surface of the concave portion 112 to which the gas vent valve 115 is attached, penetration of moisture transmitting from the slit 115a of the gas vent valve 115 along the length thereof towards the flat portion 110 of the cap 100 may be prevented, and moisture permeability when the electric double layer capacitor before use is stored or even when use has begun but the internal and the external pressure of the container 19 are still equal to each other may be reduced.

In more detail, the gas vent valve 115 is closed when the electric double layer capacitor before use is stored or when use has begun but the internal and the external pressure of the container 19 are still equal to each other, as shown in FIG. 3(a). However, since a minute amount of moisture in the air may pass through the hole 19d formed in the sheet member and through the synthetic resin layers 19c of the sheet member, penetrating into the container 19, the distance between the hole 19d and the flat portion 110 in the direction permeable toward the inside of the container 19 is formed longer so that penetration of moisture in the air can be difficult.

The cap 100 of the present invention is angular with one side being the flat portion 110 and the other side being the curved portion 120; however, it may commonly be a trapezoid or a rectangle as long as it is convex. In the case of a trapezoid or a rectangle, the pressure-regulating valve 130 may be provided on the top side. In addition, while the cap 100 may be curved on the whole, the pressure-regulating valve 130 is preferably provided on a flat surface. This is because operation will be correct as mentioned before.

The electric double layer capacitor 1 of the present invention is used in plurality connected together, as shown in FIG. 2(b). In this case, facing flat portions 110 of adjacent caps 100 to each other secures space in front of the pressure regulating valve 130. Assuming that the pressure-regulating valve 130 is adhered to adjacent electric double layer capacitors, the pressure-regulating valve 130 is obstructed, not allowing release of pressure; however, such problem may be resolved by providing the pressure-regulating valve 130 on the slanted flat portion 110, which is one of the slopes of the cap 100, so that the flat portions 110 face each other.

The electrolytic solution 14 was given as an example in the above embodiment; however, a gelatinous or solid electrolytic composition may be used instead of the electrolytic solution 14.

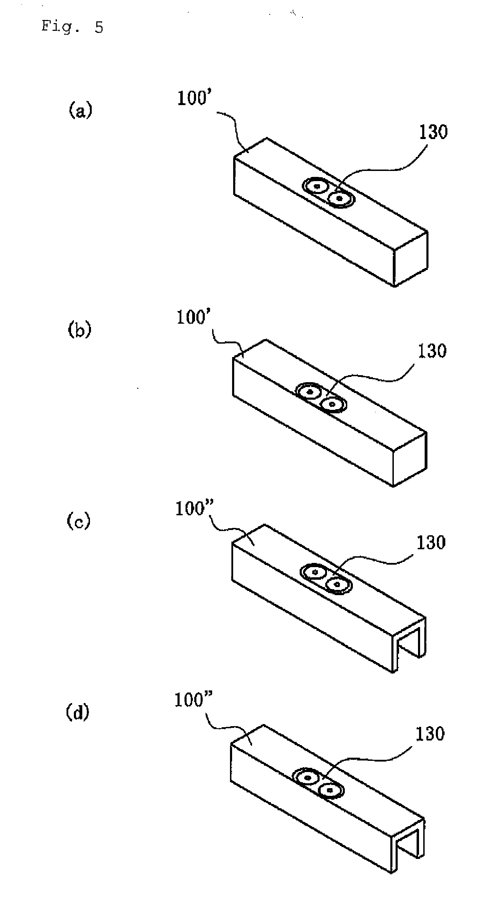

FIG. 5 is a diagram showing an oblong cap of another embodiment. The lead terminals 18, the ribs 102, and the reinforcing parts 104 are deployed on the side in which the pressure-regulating valve 130 is provided, but are omitted from the drawing. A cap 100' of FIG. 5(a) is boxy having both ends of a square bracket shape closed without a bottom. The pressure-regulating valve 130 is provided at the center of the top surface of the cap 100' and the center in the width direction. The cap 100' of FIG. 5(b) is boxy without a bottom as in (a) and the pressure-regulating valve 130 is provided at the center of the top surface in the length direction and displaced to one side in the width direction. A cap 100" of FIG. 5(c) is a square bracket shape having open ends, and the pressure-regulating valve 130 is provided at the center of the top surface of the cap 100". FIG. 5(d) shows the cap 100" having a square bracket shape having open ends as in FIG. 5(c) but the pressure-regulating valve 130 is provided at the center of the top surface in the length direction and displaced to one side in the width direction.

In any case, the caps 100' and 100" are oblong box shapes, which allow provision of maximum space 17 next to a capacitor sandwiched between two electric double layer capacitors. Furthermore, since the pressure-regulating valve 130 is provided on the top or flat part of the cap, the pressure-regulating valve 130 is not obstructed by adjacent electric double layer capacitors 1 even if multiple electric double layer capacitors 1 are adhered to each other and aligned. Moreover, by securing a maximum space 17 and arranging the pressure-regulating valve 130 on the top of the cap, electrolytic solution may be reserved in abundance without touching the pressure-regulating valve even if there is excessive electrolytic solution in the capacitor.

## Claims

1. An electric double layer capacitor, comprising:
a stacked body including a stacked plurality of thin electrode plates and thin insulating plates, each inserted between each adjacent thin electrode plate so as to insulate therebetween;
a container made of a sheet member storing the stacked body; and an electrolytic solution filling the container; said electric double layer capacitor further comprising:
a cap covering a space prepared at the end of the container along the stacking length;
two inserting through-holes, which are formed in the cap and allow positive and negative lead terminals connected to the electrode plates to pass through; and
reinforcing parts formed on respective edges of the inserting through-holes.

2. The electric double layer capacitor of Claim 1, wherein the cap is deployed at the end of the stacked body in the container an angular shape straggling two facing sides of an oblong cross section of inside of the container, and has at least one part that is a flat portion in which a pressure-regulating valve is provided.

3. The electric double layer capacitor of Claim 2, wherein the cap is angular straggling two facing sides of an oblong cross section of inside of the container, one side of the angular shape is a flat portion, and the other side is a convex curved portion.

4. The electric double layer capacitor of either Claim 2 or 3, wherein the cap has a sheet member of the container stacked thereupon, and the pressure-regulating valve comprises a through-hole formed in the cap, a hole formed in the sheet member, and a gas vent valve provided in the hole.

5. The electric double layer capacitor of either Claim 2 or 3, wherein the cap has a sheet member stacked thereupon, and the pressure-regulating valve comprises a through-hole formed in the cap, a gas-permeable film sealing the through-hole, a hole formed in the sheet member, and a gas vent valve provided in the hole.

6. The electric double layer capacitor of either Claim 4 or 5, wherein the gas vent valve and the gas-permeable film are arranged apart from each other, and the sheet member and the cap over the gas vent valve and peripheral region thereof or over the gas vent valve, the gas-permeable film, and peripheral regions thereof are detachable.

7. An electric double layer capacitor, comprising:
a stacked body including a plurality of thin electrode plates and thin insulating plates, each inserted between each adjacent electrode plate so as to insulate therebetween;
a container made of a sheet member storing the stacked body; and
electrolytic solution filling the container; said electric double layer capacitor further comprising:
a cap, which is deployed at the end of the container and straddles two facing sides of an oblong cross section of inside of the container, wherein the cap has at least one region that is a flat portion, a pressure-regulating valve is provided in the flat portion, and the pressure-regulating valve has a through-hole formed in the cap, a hole formed in the sheet member, and a gas vent valve provided in the hole.

8. The electric double layer capacitor of Claim 7, wherein the pressure-regulating valve has a gas-permeable film sealing the through-hole of the cap.

9. The electric double layer capacitor of either Claim 7 or 8, wherein the cap is angular.
